# EUROPEAN PATENT SPECIFICATION

(11) **EP 2 837 887 B1**
(45) Date of publication and mention of the grant of the patent: **12.06.2019**
(21) Application number: 13180549.1
(22) Date of filing: 15.08.2013
(51) Int. Cl.: F02C 3/00, F23R 3/06, F23R 3/04

(54) **Combustor of a gas turbine with pressure drop optimized liner cooling**
Brennkammer einer Gasturbine mit Druckverlust für optimierte Verkleidungskühlung
Chambre de combustion d'une turbine à gaz avec refroidissement de doublure optimisée de chute de pression

(43) Date of publication of application: 18.02.2015
(73) Proprietor: Ansaldo Energia Switzerland AG, 5401 Baden (CH)
(72) Inventor: Maurer, Michael Thomas, 79713 Bad Saeckingen (DE); Benz, Urs, 5073 Gipf-Oberfrick (CH); Swiatek, Slawomir, 5417 Untersiggenthal (CH); Konradt, Oliver, 5304 Endingen (CH); Mallm, Maurice, 5242 Birr (CH)
(74) Representative: Bernotti, Andrea

(56) References cited:
- EP-A1- 1 515 090
- EP-A2- 1 970 628
- EP-A2- 1 983 266
- US-A- 4 896 510
- US-A1- 2005 056 020

## Description

### Specification

The invention refers to gas turbines and is directed to a gas turbine with an air-cooled combustor.

### Prior art

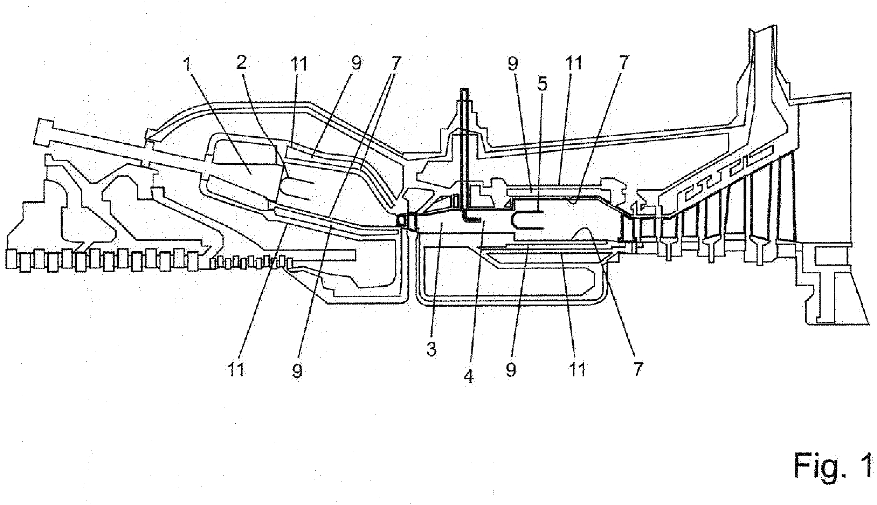

From the market gas turbines with air-cooled combustors are known. For example the applicant successfully produces gas turbines of this type under the name GT24/GT26. Figure 1 illustrates a schematic and simplified cross section through a gas turbine GT24/GT26.

Neither the rotor nor the axis of rotation of this gas turbine are shown in figure 1. This means that some of the components that are illustrated in figure 1 have an annular geometry.

Starting from the left in figure 1 the compressed air that enters the burner (no reference number) is denominated with reference number 1. The compressed air 1 is fed into the burner creating a homogenous, lean fuel/air mixture.

This mixture of fuel and air is burned in a first combustor 2 forming a single, annular flame ring. This flame ring has an inner recirculation zone that stabilizes the flame in the free space within the combustion zone.

The hot exhaust gas exiting the first combustor 2 moves through the high-pressure turbine stage before entering the second burner 4 of the second combustor 5.

The claimed invention is directed to the first combustor 2 and / or the second combustor 5.

As can be seen from figure 1, the combustors 2 and 5 are in radial direction bordered by liners 7. These liners 7 are the outer walls of the combustors 2 and 5 and are exposed to high temperatures resulting from the flames.

The liners 7 are cooled by impingement cooling and convective cooling using compressed cooling air. The cooling air flows through annular channels 9. The annular channels 9 are bordered by cover plates 11 (in case of combustor 5) or carrier structures (in case of combustor 2) .

The cooling air flows through the channels 9 in figure 1 from left to right. The cooling air is delivered by a compressor of the gas turbine (not shown) which also delivers compressed air into the first burner 1.

Since compressing air requires mechanical energy, it is always a goal to reduce the cooling air consumption and/or the pressure drop of the cooling air in the channels 9, since this raises the efficiency and the power output of the gas turbine.

From US 4, 896, 510 a combustor liner impingement cooling arrangement of a gas turbine is known. It comprises a channel with a channel providing pressurized cooling air to the impingement cooling holes in the liner.

Prior art gas turbines have a pressure drop in the channels 9 of the first combustor 2 of approximately 2-3 per cent [%] relative to pᵢₙ (compressor end pressure).

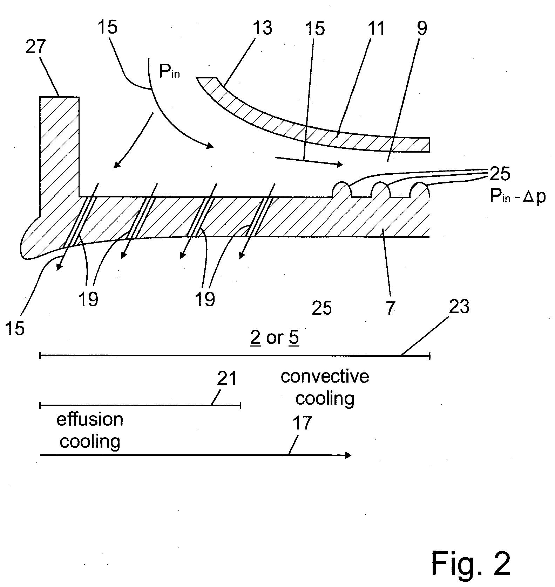

As mentioned before, in figure 1 the cooling air flows figure is from left to right. This means that "upstream" is equivalent to "on the left side" of figure 1 (and the figures 2 to 5). The term "downstream" is related to the more right part of the figures. Anyway, the terms "upstream" and "downstream" are related to the flow direction of the cooling air.

It is an objective of the claimed invention to reduce the pressure drop of the cooling air of the combustors and / or to reduce the amount of cooling air required for the cooling of the first and / or second combustor of a gas turbine.

This goal is achieved by a combustor of a gas turbine in accordance with claim 1.

Doing so, the pressure drop due to turbulences of the cooling air at the entrance into the channel is reduced. As a result, the pressure drop of the cooling air is reduced significantly.

The geometry of the claimed nozzle may be similar to the first part of a laval nozzle. It may also be in a longitudinal direction circular or parabolic shaped.

The geometry of the nozzle may also be different from the a. m. examples, for reasons of even better flow of cooling air and/or an easier manufacture.

For example, it is possible to optimize the geometry of the nozzle by 1-D, 2-D or 3-D flow simulations of the cooling air flow.

By designing the beginning of the cover plate (at the upstream side of the channel) as a nozzle, the pressure drop may be significantly reduced compared to tubular or cylindrical cover plates as are known from the prior art. Pressure drop reduction of up to 0.5% relative to pin is expected by introducing a nozzle at the beginning of the cover plate.

It is further possible to reduce the pressure drop losses by drilling effusion holes in the liner and in that at least one of the effusion holes is longer than 1.4 times the local thickness of the liner.

Doing so, it is possible to effectively cool the upstream end of the liner without impingement cooling as is known from the prior art. Impingement cooling is very effective to reduce the temperature of the liner, but causes high pressure drops of the cooling air. Therefore the cooling air has to be compressed to a high pressure, which reduces the overall efficiency of the gas turbine.

By avoiding impingement cooling at the upstream end of the liner, it is possible to further reduce the pressure drop of the cooling air significantly. Impingement cooling uses typically 0.5% to 1.5% pressure drop relative to compressor end pressure.

One further important aspect of the claimed invention is to provide very long effusion holes. This means that at least some of the effusion holes of the claimed combustor liner are longer than 15 mm.

A length of up to 15 mm allows manufacturing the effusion holes into the liner by means of a laser. Thicknesses of more than 15 mm cannot be made by means of a laser.

To achieve the claimed length of more than 15 millimeters it is claimed that at least some of the effusion holes are partially bordered by a groove in the liner and a covering. These grooves may cover the length of the effusion holes that are above 15 mm. These grooves may be cast along with casting the liner 7. To complete these very long effusion holes, it is claimed to cover these grooves by a covering. This results in effusion holes that are longer than 15 mm and can be designed as required. For example, the effusion holes can be bent to optimize the heat transfer form the liner to the cooling air that flows through the effusion holes.

A further aspect of the claimed invention is that over a section of the effusion holes their longitudinal axis is parallel to at least one surface of the liner.

This means that the effusion holes very effectively cool a certain area at the upstream end of the liner. Therefore, no impingement cooling of this area of the liner is required.

In this case, it is preferred if the longitudinal axis of the effusion holes is parallel to the longitudinal axis of the liner.

To facilitate the manufacture of these effusion holes, it is claimed that in the section of where the effusion holes are parallel to the at least one surface of the liner, the liner has a greater thickness than in a channel section of the liner. This channel section is located downstream of the effusion holes.

Doing so, it is possible to have long effusion holes at the upstream end of the liner and it is further possible to produce these effusion holes by means of a laser for the first 15 mm. The additional length of the effusion holes can be made for example by drilling. It is also possible to drill the whole length of the effusion holes.

In a further embodiment of the claimed invention, the cover plates and especially the nozzle part of the cover plates extends in axial direction over at least one row of effusion holes.

This means that at the upstream end of the liner the effusion holes cool the liner and in the more downstream part of the liner it is the cooling air flowing through the channel that supply the convective cooling of.

In a further advantageous embodiment of the invention the section with effusion cooling and the section with convection cooling overlap a bit in axial direction. Consequently all areas of the liner are appropriately cooled and no local overheating occurs.

It has been proven advantageous if at the upstream end of the liner the rows of effusion holes extend in axial direction of the liner over a length of more than 5 cm, preferable more than 10 cm or even more than 15 cm.

It is possible to produce the liner by casting or by selective laser melting. By casting the liner, it is possible for example to form the grooves into the casting mold. Doing so, size and geometry of this part of the effusion holes are nearly unrestricted and can be designed to achieve optimal cooling effects.

In case the liner is produced by selective laser melting, it is even possible to have three-dimensionally bent effusion holes. The technology of selective laser melting enables even more degrees of freedom as far as size and geometry of the effusion holes are concerned.

Further advantages and features are disclosed in the figures and their descriptions:

### Drawings

- Figure 1: shows a cross-section of a gas turbine (prior art);
- Figure 2: shows a first embodiment of the claimed invention comprising several rows of effusion holes and
- Figures 3 to 5: show further embodiments of effusion holes.

### Description of the embodiments

Starting with the first embodiment of the claimed invention, it can be seen that the upstream end of the cover plate 11 is bent to form a nozzle 13.

In a longitudinal section the nozzle 13 may be circular and/or parabolic. It may also have shape of the entrance of a laval nozzle.

The cooling air flow is illustrated by several arrows 15. For reasons of clarity, not all of these arrows have the reference numeral 15.

An arrow 17 shows the general direction of flow of the cooling air in figures 2 to 5 from left to right. In other words: the arrow 17 starts at the upstream end or the beginning of the liner 7 and points towards the downstream end (not shown) of the liner 7. This arrow 17 is parallel to the longitudinal direction of the liner 7.

As can be seen from figure 2 this embodiment comprises at the upstream end of the liner 7 several rows of effusion holes 19.

Each row of effusion holes 19 is arranged circumferentially around the liner 7. Consequently, from each row in figure 2 only one effusion hole 19 is illustrated in figure 2.

As can be further seen from figure 2, the rows of effusion holes 19 extend in axial direction from the beginning of the liner 7 towards the downstream end of the liner 7.

The axial extension of these rows of effusion holes 19 is illustrated in figure 2 by means of the line 21.

As is illustrated by the line 23 from the beginning of the liner 7 towards the end of the liner 7, the liner 7 is cooled by convective cooling. At the upstream beginning of the liner 7, the convective cooling is achieved by rows of effusion holes 19. These rows of effusion holes extend further downstream than the (beginning of the) nozzle 13.

Further downstream from the effusion holes, the convective cooling of the cooling air in the channel 9 is intensified by turbulators 25 on the outer surface of the liner 7. This means that the turbulators 25 cover a part of the wall of the channel 9.

Since the effusion holes 19 are drilled under an angle of approximately 30 to 45 degrees to the axial direction of the liner 7 (c. f. arrow 17), they are approximately 1.4 times longer than the local thickness of the liner 7.

The angle between the effusion holes 19 and the axial direction of the liner 7 (cf. reference numeral 17) is one possibility to influence the cooling effect of the effusion holes. The longer the effusion holes 19 are, the more intense the convective cooling inside the effusion holes 19 is.

Apparently, the number of effusion holes 19 is a further possibility to influence the cooling effect and the cooling air demand for this part of the inventive convective cooling.

At the beginning of the convective cooling, the cooling air 15 has a pressure pᵢₙ which may be about 17 bars.

Due to the unavoidable pressure drops in the channel 9, the cooling air 15 has a reduced pressure pᵢₙ minus Δp at the end of the channel 9.

Since the nozzle 13 reduces these pressure losses and there is no imping
ement cooling at all, the pressure drop Δp is significantly lower than in the prior art with partial impingement cooling.

The pressure drop Δp according to this embodiment are approximately 1 to 2 per cent of pᵢₙ.

In conventional cooling systems with partial impingement cooling, the pressure drop Δp is approximately 2-3 per cent of pᵢₙ.

As can be seen from this embodiment by carefully designing the nozzle 13 and by avoiding any impingement cooling, the pressure drop Δp is significantly reduced compared to the prior art with partial impingement cooling.

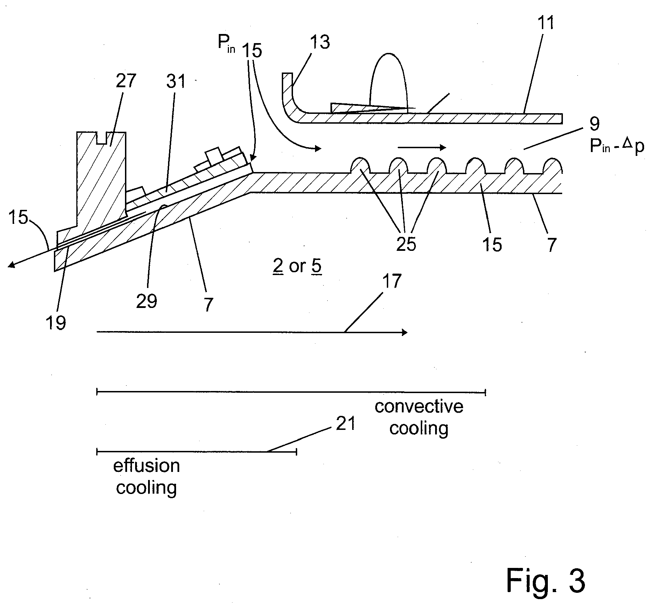

Figure 3 shows a second embodiment of the claimed invention with even longer effusion holes 19. In this embodiment, the effusion holes 19 are drilled at the upstream end of the liner 7. Downstream of a wall 27 the effusion holes 19 are constituted by grooves 29, which may be cast together with the liner 7 and its turbulators 25. These grooves 29 are closed to by a covering 31 resulting in channel-like effusion holes. The covering 31 may be fixed to the liner 7 by screws, welds or fixation pins.

By casting the grooves 29, it is possible to extend the length of the effusion holes 19 to far more than 15 mm. 15 mm is a limit for drilling effusion holes 19 by means of a laser, if the liner 7 is made of steel or a temperature resistant alloy.

Again, this embodiment has only convective cooling from the beginning of the liner 7. At the upstream end of the liner 7 there is convective cooling inside each effusion hole 19. This embodiment comprises only one row of circumferentially arranged effusion holes 19. These effusion holes 19 are very long compared to the thickness of the liner 7. They may be 5 to 10 times longer than the thickness of the liner 7 due to the possibility of combining a drilled part of the effusion holes 19 with a section of the effusion holes where they are constituted by grooves 29 and their coverings 31.

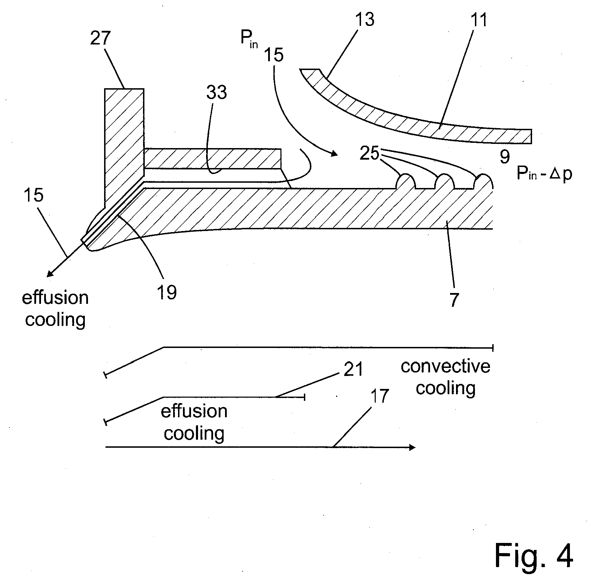

In figure 4, a further embodiment of the claimed invention is shown. Again, the effusion holes 19 are very long compared to the thickness of the liner. In this embodiment, the effusion holes 19 are bent and they also comprise a drilled part (which is at the left at the upstream end of the liner 7) and a second part 33, which may again be manufactured by casting grooves and covering these grooves with a covering.

It is also possible to manufacture the whole liner along with the section 33 of the effusion holes 19 and the turbulators 25 by selective laser melting. This method of manufacture comprises locally melting a powder of metal in a way that the liner 7 with its complex geometry including the effusion holes is created by locally melting the powder of metal. Selective laser melting is a method that is known to a man skilled in the art and therefore is not described in detail in this application.

In this embodiment, the section 33 ends in longitudinal direction at the beginning of the nozzle 13. It is also possible to elongate the section 33 until it extends into the channel 9.

Again, there is only convective cooling of the liner 7, which results in reduced pressure drop Δp.

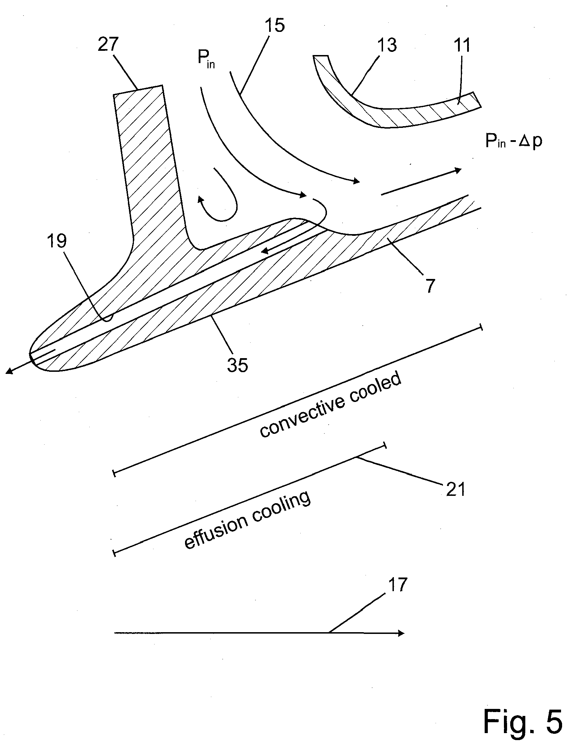

Figure 5 shows a further embodiment with a very long effusion hole 19 compared to the local thickness of the liner 7. To be able to manufacture effusion holes 19 that are more or less parallel to a surface 35 of the liner 7 makes it necessary in some cases to raise the thickness of the liner in the upper part where effusion takes please (the bar 21 in figures 3 to 5).

## Claims

1. Combustor of a gas turbine comprising a liner (7) and a cover plate (11), wherein the liner (7) and the cover plate (11) border a channel (9) for cooling air, wherein at the upstream beginning of the channel (9) the cover plate (11) has the shape of a nozzle (13), **characterized in, that** at least some of the effusion holes (19) are partially bordered by a groove (29) in the liner (9) which is closed by a covering (31) resulting in a channel-like extension of the at least some of the effusion holes (19).

2. Combustor according to claim 1, **characterized in, that** the liner (7) comprises effusion holes (19) and **in, that** a length of at least one of the effusion holes (19) is more than 1.4 times a local thickness of the liner (7).

3. Combustor according to one of the foregoing claims, **characterized in, that** the length of at least one of the effusion holes (19) is greater than 15 mm.

4. Combustor according to one of the foregoing claims, **characterized in, that** over a section of the effusion holes (19) their longitudinal axis is parallel to at least one surface of the liner (7).

5. Combustor according to claim 4, **characterized in, that** in this section the liner (7) has a greater thickness than in a channel section of the liner (7).

6. Combustor according to one of the foregoing claims, **characterized in, that** the cover plate (11) or the nozzle (13) extends in axial direction over at least one row of effusion holes (19).

7. Combustor according to one of the foregoing claims, **characterized in, that** the rows of effusion holes (19) extend in axial direction of the liner (7) over a length of more than 5 cm, preferably more than 10 cm or more than 15 cm.

8. Combustor according to one of the foregoing claims, **characterized in, that** the liner (7) is made by casting or by selective laser melting.

9. Combustor according to claim 8, **characterized in, that** the effusion holes (19) are at least partially generated during the casting or the selective laser melting.

10. Combustor according to one of the foregoing claims, **characterized in, that** the channel (9) for cooling air is annular.

11. Gas turbine comprising al least one compressor, at least one combustor (2, 5) at least one turbine, **characterized in, that** the at least one combustor (2, 5), is a combustor according to one of the foregoing claims.

## Patentansprüche

1. Brennkammer einer Gasturbine, eine Auskleidung (7) und eine Abdeckplatte (11) umfassend, wobei die Auskleidung (7) und die Abdeckplatte (11) einen Kanal (9) für Kühlungsluft begrenzen, wobei an dem stromaufwärtigen Anfang des Kanals (9) die Abdeckplatte (11) die Form einer Düse (13) aufweist,
**dadurch gekennzeichnet, dass**
wenigstens einige der Ausströmlöcher (19) teilweise durch eine Nut (29) in der Auskleidung (9) begrenzt sind, welche durch eine Abdeckung (31) geschlossen ist, wodurch sich eine kanalartige Erweiterung der wenigstens einigen Ausströmlöcher (19) ergibt.

2. Brennkammer nach Anspruch 1, **dadurch gekennzeichnet, dass** die Auskleidung (7) Ausströmlöcher (19) umfasst, und dass eine Länge wenigstens eines der Ausströmlöcher (19) mehr als das 1,4-fache einer lokalen Dicke der Auskleidung (7) beträgt.

3. Brennkammer nach einem der vorangehenden Ansprüche,
**dadurch gekennzeichnet, dass** die Länge wenigstens eines der Ausströmlöcher (19) größer als 15 mm ist.

4. Brennkammer nach einem der vorangehenden Ansprüche,
**dadurch gekennzeichnet, dass** über einen Abschnitt der Ausströmlöcher (19) deren Längsachse parallel zu wenigstens einer Oberfläche der Auskleidung (7) ist.

5. Brennkammer nach Anspruch 4, **dadurch gekennzeichnet, dass** in diesem Abschnitt die Auskleidung (7) eine größere Dicke aufweist als in einem Kanalabschnitt der Auskleidung (7).

6. Brennkammer nach einem der vorangehenden Ansprüche,
**dadurch gekennzeichnet, dass** die Abdeckplatte (11) oder die Düse (13) sich in Axialrichtung über wenigstens eine Reihe von Ausströmlöchern (19) erstreckt.

7. Brennkammer nach einem der vorangehenden Ansprüche,
**dadurch gekennzeichnet, dass** die Reihen von Ausströmlöchern (19) sich in Axialrichtung der Auskleidung (7) über eine Länge von mehr als 5 cm, vorzugsweise mehr als 10 cm oder mehr als 15 cm erstrecken.

8. Brennkammer nach einem der vorangehenden Ansprüche,
**dadurch gekennzeichnet, dass** die Auskleidung (7) durch Gießen oder durch selektives Laserschmelzen gefertigt ist.

9. Brennkammer nach Anspruch 8, **dadurch gekennzeichnet, dass** die Ausströmlöcher (19) wenigstens teilweise während des Gießen oder des selektiven Laserschmelzens erzeugt sind.

10. Brennkammer nach einem der vorangehenden Ansprüche,
**dadurch gekennzeichnet, dass** der Kanal (9) für die Kühlungsluft ringförmig ist.

11. Gasturbine, die wenigstens einen Kompressor, wenigstens eine Brennkammer (2, 5) und wenigstens eine Turbine umfasst,
**dadurch gekennzeichnet, dass**
die wenigstens eine Brennkammer (2, 5) eine Brennkammer gemäß einem der vorangehenden Ansprüche ist.

## Revendications

1. Chambre de combustion d'une turbine à gaz comprenant un revêtement (7) et un couvercle (11), où le revêtement (7) et le couvercle (11) bordent un canal (9) d'air de refroidissement, où au début amont du canal (9), le couvercle (11) présente une forme de buse (13), **caractérisée en ce qu'**une partie au moins des trous d'effusion (19) sont bordés en partie par une rainure (29) dans le revêtement (9) qui est fermée par une couverture (31) résultant en une extension du ou des trous d'effusion (19) similaire à un canal.

2. Chambre de combustion selon la revendication 1, **caractérisée en ce que** le revêtement (7) comprend des trous d'effusion (19), et **en ce que** la longueur de l'un au moins des trous d'effusion (19) est supérieure à 1,4 fois l'épaisseur locale du revêtement (7).

3. Chambre de combustion selon l'une quelconque des revendications précédentes, **caractérisée en ce que** la longueur de l'un au moins des trous d'effusion (19) est supérieure à 15 mm.

4. Chambre de combustion selon l'une quelconque des revendications précédentes, **caractérisée en ce que**, sur une section des trous d'effusion (19), leur axe longitudinal est parallèle à une surface au moins du revêtement (7).

5. Chambre de combustion selon la revendication 4, **caractérisée en ce que** dans cette section, le revêtement (7) présente une épaisseur plus grande que dans une section du canal du revêtement (7).

6. Chambre de combustion selon l'une quelconque des revendications précédentes, **caractérisée en ce que** le couvercle (11) ou la buse (13) s'étend dans la direction axiale sur une rangée au moins des trous d'effusion (19).

7. Chambre de combustion selon l'une quelconque des revendications précédentes, **caractérisée en ce que** les rangées de trous d'effusion (19) s'étendent dans la direction axiale du revêtement (7) sur une longueur supérieure à 5 cm, de préférence supérieure à 10 cm ou supérieure à 15 cm.

8. Chambre de combustion selon l'une quelconque des revendications précédentes, **caractérisée en ce que** le revêtement (7) est réalisé par coulage ou par fusion sélective par laser.

9. Chambre de combustion selon la revendication 8, **caractérisée en ce que** les trous d'effusion (19) sont générés en partie au moins au cours du coulage ou de la fusion sélective par laser.

10. Chambre de combustion selon l'une quelconque des revendications précédentes, **caractérisée en ce que** le canal (9) de l'air de refroidissement est annulaire.

11. Turbine à gaz comprenant au moins un compresseur, au moins une chambre de combustion (2, 5), au moins une turbine, **caractérisée en ce que** la ou les chambres de combustion (2, 5) sont des chambres de combustion selon l'une quelconque des revendications précédentes.
